# EUROPÄISCHE PATENTSCHRIFT

(11) **EP 1 109 281 B1**
(45) Veröffentlichungstag und Bekanntmachung des Hinweises auf die Patenterteilung: **21.06.2006**
(21) Anmeldenummer: 00250440.5
(22) Anmeldetag: 18.12.2000
(51) Int. Cl.: H02H 7/08

(54) **Strombegrenzungsschaltung**
Current limiting circuit
Circuit limiteur de courant

(30) Priorität: 17.12.1999 DE 19963250; 18.12.1999 DE 19963309; 20.10.2000 AT 18012000
(43) Veröffentlichungstag der Anmeldung: 20.06.2001
(73) Patentinhaber: Vaillant GmbH, 42859 Remscheid (DE)
(72) Erfinder: Grabe, Jochen, 51688 Wippenfürth (DE); Wölfl, Carsten, 42853 Remscheid (DE)
(74) Vertreter: Hocker, Thomas

(56) Entgegenhaltungen:
- DE-C- 19 502 016
- JP-A- 6 153 595
- US-A- 4 477 758

## Beschreibung

Die Erfindung bezieht sich auf eine Strombegrenzungsschaltung gemäß dem Oberbegriff des unabhängigen Anspruches.

Eine solche Schaltunngsanordnung ist aus US 4 477 758 bekannt.

Zur Ansteuerung eines Schrittschaltmotors ist in der Regel eine nach dem Push-Pull-Prinzip arbeitende Treiberschaltung vorgesehen, die mit einem Signalgeber verbunden ist.

Bei solchen Schaltungen besteht das Problem, daß diese empfindlich gegen Überströme und Kurzschlüsse sind.

Ziel der Erfindung ist es, eine Strombegrenzungsschaltung für eine Treiberschaltung eines Schrittschaltmotors vorzuschlagen, die sich durch einen einfachen Aufbau auszeichnet.

Erfindungsgemäß wird dies bei einer Schaltung der eingangs erwähnten Art durch die kennzeichnenden Merkmale des unabhängigen Anspruches erreicht.

Durch die vorgeschlagenen Maßnahmen ist sichergestellt, daß bei einem zu hohen Strombedarf der Treiberschaltung oder einem Kurzschluß der Spannungsabfall über den dem Versorgungsspannungs-Anschluß vorgeschalteten Widerstand so weit ansteigt, daß der mit diesem in Verbindung stehende elektronische Schalter durchschaltet und der Kondensators geladen wird. Erreicht die Spannung über dem Kondensator eine bestimmte Größe, so schaltet der zweite elektronische Schalter durch und schließt das anliegende Enabel-Signal des Signalgebers kurz, wodurch die Treiberschaltung abgeschaltet wird.

Diese Abschaltung erfolgt zyklisch mit einer von den Werten des Kondensators und des mit diesem in Reihe geschalteten Widerstandes und der vom Strom abhängigen Zeitkonstante. Durch eine entsprechende Dimensionierung wird die Treiberschaltung nur sehr kurz eingeschaltet und bleibt sehr viel länger abgeschaltet, wodurch die mittlere Stromaufnahme der Treiberschaltung entsprechend gering bleibt und die Treiberschaltung, bei der es sich auch um einen Treiberbaustein handeln kann, wird selbst bei einem direkten Kurzschluß nicht zerstört.

Durch die Merkmale des Anspruches 2 ergibt sich der Vorteil, daß ein allenfalls vorliegender Fehler, der eben zu einem Ansprechen der Strombegrenzungsschaltung führt, zur Anzeige gelangt und entsprechende Maßnahmen ergriffen werden können.

Die Erfindung wird nun anhand der Zeichnung näher erläutert. Dabei zeigen:
Fig. 1 schematisch eine erfindungsgemäße Strombegrenzungsschaltung und
Fig. 2 und 3 Schaltungen für Bipolarmotoren und Unipolarmotoren, bei denen die erfindungsgemäße Strombegrenzungsschaltung anwendbar ist.

Gleiche Bezugszeichen bedeuten in allen Figuren gleiche Einzelteile.

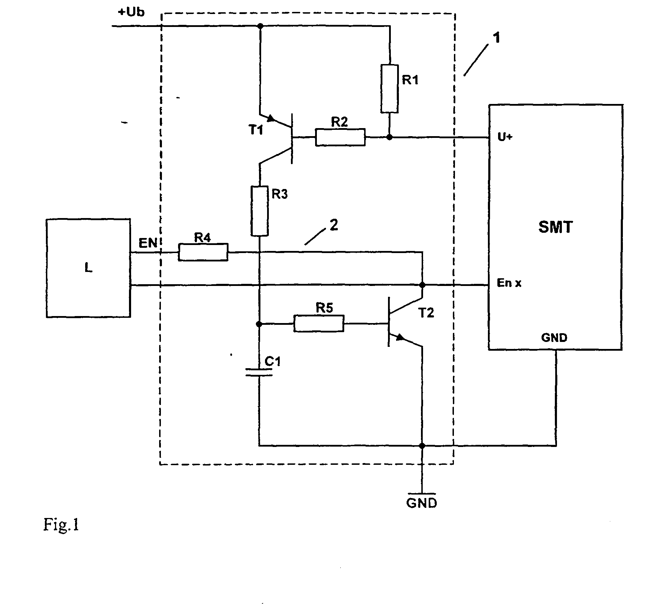

Bei der Strombegrenzungsschaltung 1 nach der Fig. 1 ist an einen Pol +Ub einer Versorgungsgleichspannung ein elektronischer Schalter T1 mit seinem Emitter direkt und ein Versorgungsspannungs-Anschluß U+ einer Treiberschaltung SMT über einen Widerstand R1 angeschlossen. Weiters ist an dem Anschluß U+ ein Widerstand R2 angeschlossen, der mit einem Basisanschluß des elektronischen Schalters T1 verbunden ist.

Der Kollektor des elektronischen Schalters T1 ist mit einer Serienschaltung eines Widerstandes R3 und eines Kondensators C1 verbunden, welche Serienschaltung R3, C1 mit dem zweiten Pol GND der Versorgungsspannung verbunden ist. Dieser Pol GND der Versorgungsspannung ist mit einem Versorgungsspannungs-Anschluß GND der Treiberschaltung SMT verbunden.

Der Enabel-Anschluß Enx der Treiberschaltung SMT ist über einen Widerstand R4 mit einem Steuerausgang EN einer Steuerschaltung L verbunden. Dieser Enabel-Anschluß Enx ist weiters mit einem Kollektor eines weiteren elektronischen Schalters T2 verbunden, dessen Basissteuereingang über einen Widerstand R5 mit dem Verknüpfungspunkt der Serienschaltung des Widerstandes R3 und des Kondensators C1 verbunden ist. Der Emitter des elektronischen Schalters T2 ist mit dem Pol GND der Versorgungsspannung verbunden.

Fließt im Betrieb ein zu großer Strom in die Treiberschaltung SMT so steigt der Spannungsabfall über dem Widerstand R1 soweit an, daß der Schalter T1 durchschaltet und dadurch der Kondensator C1 geladen wird. Dadurch steigt die Vorspannung an dem Steuereingang des Schalters T2 an, so daß auch dieser durchschaltet und ein anstehendes Signal der Steuerschaltung L kurzgeschlossen ist. Dadurch wird die Treiberschaltung SMT abgeschaltet und diese wird daher bei jedem Steuerimpuls der Steuerschaltung L nur kurzzeitig eingeschaltet, wodurch sich ein nur relativ geringer mittlerer Stromfluß in die Treiberschaltung ausbilden kann.

Der Kurzschluß des Steuersignals bei einem Ansprechen der Strombegrenzungsschaltung bewirkt auch ein Absinken der Spannung an einem mit dem Schalter T2 und dem Enabel-Anschluß Enx der Treiberschaltung SMT über eine Signalleitung 2 verbundenen Fehtersignat-Anschtuß der Steuerschaltung. Sinkt die Spannung an diesem Anschluß der Steuerschaltung L während des Steuerimpulses ab, so gibt die Steuerschaltung eine Fehlermeldung ab.

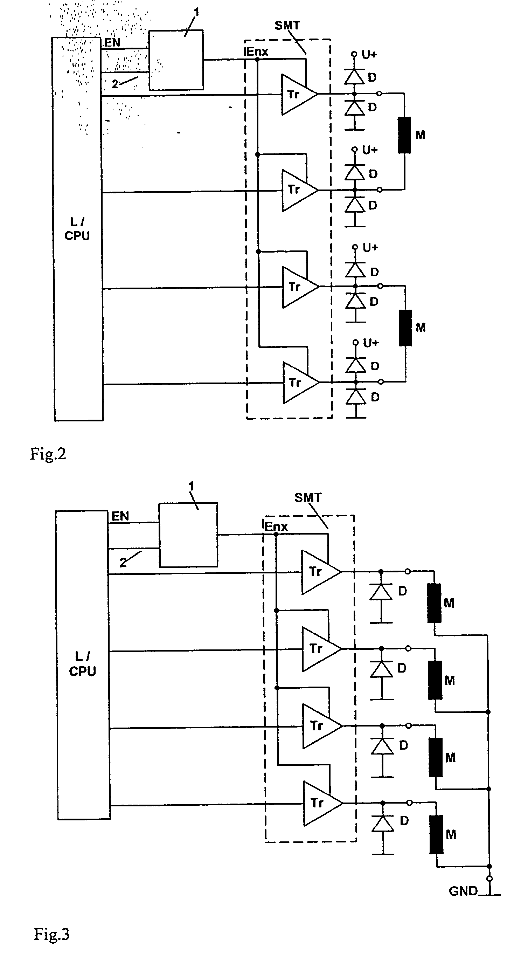

Die Fig. 2 zeigt eine Schaltung für bipolare Schrittschaltmotorenmit Wicklungen M. Bei dieser ist als Steuerschaltung eine CPU vorgesehen, an die die Strombegrenzungsschaltung 1 angeschlossen ist, die der Treiberschaltung SMT vorgeschaltet ist. Dabei sind in der Treiberschaltung SMT vier parallel geschaltete Treiber TR angeordnet, von denen je zwei an eine Wicklung M eines Schrittschaltmotors angeschlossen sind. Dabei sind in üblicher Weise Serienschaltungen von je zwei Löschdioden D vorgesehen, wobei die Wicklungen M an den Verbindungspunkten der Löschdioden D angeschlossen sind.

Die Fig. 3 zeigt eine Schaltung für unipolare Schrittschaltmotoren mit Wicklungen M. Diese unterscheidet sich von jener für bipolare Motoren lediglich durch den Anschluss der Wicklungen M des Schrittschaltmotors an die der Treiberschaltung SMT, bei der ebenfalls vier parallel geschaltete Treiber Tr vorgesehen sind. Dabei sind die Wicklungen M mit ihren einen Enden miteinander verbunden und an den Pol GND der Versorgungsspannung angeschlossen, wogegen die zweiten Enden der Wicklungen M mit den Treibern Tr verbunden sind. Dabei sind an diesen Enden einzelne Löschdioden D angeschlossen.

## Patentansprüche

1. Strombegrenzungsschaltung für eine Treiberschaltung für einen Schrittschaltmotor, wobei die Treiberschaltung Anschlüsse für eine Versorgungsspannung und einen Enabel-Anschluß aufweist, der mit einem Signalgeber (L) verbunden ist, wobei die Versorgungsspannung über einen Widerstand (R1) an einen Versorgungs-Spannungsanschluß (U+) und an den zweiten (GND) im wesentlichen direkt angeschlosssen ist, **dadurch gekennzeichnet, dass** der Versorgungs-Spannungsanschluß (U+) über einen Widerstand (R2) mit einem Steueranschluß eines als elektronischen Schalter wirkenden Transistors (T1) verbunden ist, dessen Haupt-Schaltstrecke direkt und über eine Serienschaltung eines Widerstandes (R3) und eines Kondensators (C1) an der Versorgungsspannung (+U/b, GND) und ein weiterer als elektronischer Schalter wirkender Transistor (T2) vorgesehen ist, dessen Haupt-Schaltstrecke einerseits mit dem Enabel-Anschluß (Enx) und über einen Widerstand (R4) mit einem Signalgeber (L) und andererseits mit einem Pol (GND) der Versorgungsspannung verbunden ist, wobei der Steueranschluß dieses Transistors (T2) an den Verbindungspunkt der RC-Schaltung (R3, C1), vorzugsweise über einen Widerstand (R5) angeschlossen ist.

2. Strombegrenzungsschaltung nach Anspruch 1, **dadurch gekennzeichnet, daß** der Enabel-Eingang (Enx) der Treiberschaltung (SMT) über eine Signalleitung (2) mit einem Fehlersignal-Eingang des Signalgebers (L) verbunden ist.

## Claims

1. A current limiting circuit for a driver circuit for a stepping motor, such driver circuit comprising connections for a supply voltage and an enable input connected to a signal transmitter (L), with the supply voltage being connected to one supply voltage terminal (U+) via a resistor (R1) and to the second one (GND) essentially directly, **characterised in that** the supply voltage terminal (U+) is connected via a resistor (R2) to the control terminal of a transistor (T1) which acts as an electronic switch and whose main switching path is directly and via a series-connected resistor (R3) and capacitor (C1) connected to the supply voltage (+U/b, GND), and that a further transistor (T2) is provided which acts as an electronic switch and whose main switching path is on the one hand connected to the enable input (Enx) and via a resistor (R4) to a signal transmitter (L) and, on the other hand, to one terminal (GND) of the supply voltage, with the control terminal of this latter transistor (T2) being connected, preferably via a resistor (R5), to the junction point with the RC circuit (R3, C1),

2. A current limiting circuit as defined in Claim 1, **characterised in that** the enable input (Enx) of the driver circuit (SMT) is connected via a signal line (2) to an error signal input of the signal transmitter (L).

## Revendications

1. Montage limiteur de courant pour un driver d'un moteur pas à pas, le driver comprenant des bornes pour une tension d'alimentation et une borne Enabel qui est reliée à un générateur de signaux (L), la tension d'alimentation étant reliée plus ou moins directement, par l'intermédiaire d'une résistance (R1), à une borne (U+) et au deuxième (GND), montage **caractérisé par le fait que** la borne (U+) est reliée, par l'intermédiaire d'une résistance (R2), à une borne de commande d'un transistor (T1) agissant comme interrupteur électronique dont la coupure principale est prévue directement et par l'intermédiaire d'un montage en série d'une résistance (R3) et d'un condensateur (C1) sur la tension d'alimentation (+U/b, GND) et un autre transistor (T2) agissant comme interrupteur électrique est prévu dont la coupure principale est reliée d'une part à la borne Enabel (Enx) et, par l'intermédiaire d'une résistance (R4) à un générateur de signaux (L) et d'autre part à un pôle (GND) de la tension d'alimentation, la borne de commande de ce transistor (T2) étant reliée au point de liaison du montage RC (R3, C1) de préférence par l'intermédiaire d'une résistance (R5).

2. Montage limiteur de courant suivant la revendication 1, **caractérisé par le fait que** l'entrée Enabel (Enx) du driver (SMT) est reliée par une liaison (2) à une entrée de signaux d'erreur du générateur de signaux (L).
